# EUROPEAN PATENT APPLICATION

(11) **EP 4 787 048 A1**
(43) Date of publication of application: **05.08.2026**
(21) Application number: 23954629.4
(22) Date of filing: 07.10.2023
(51) Int. Cl.: G02B 27/01

(54) **SMART GLASSES**

(71) Applicant: SHENZHEN YIWEN TECH LIMITED, Shenzhen, Guangdong 518055 (CN)
(72) Inventor: OUYANG, Jian, Shenzhen, Guangdong 518000 (CN)
(74) Representative: Agca Kizil, Tugce
(86) International application number: PCT/CN2023/123276
(87) International publication number: WO 2025/073116

(57) **Abstract**

This application discloses a pair of smart glasses, which includes a display module, a frame module and a battery module; the display module includes an optical engine assembly and a waveguide assembly, the waveguide assembly is configured to receive display light emitted by the optical engine assembly and form outgoing light; the frame module includes a frame assembly and a temple assembly connected to the frame assembly, the frame assembly is connected to the waveguide assembly, and both the optical engine assembly and the waveguide assembly are mounted on the frame assembly;the temple assembly includes a temple and a flexible connector provided in the temple; the battery module is connected to an end of the temple away from the frame module, and the battery module is electrically connected to the optical engine assembly via the flexible connector; wherein the temples have flexibility, thereby making the temples deform based on head size and head shape.

## Description

### FIELD

This application relates to the technical field of smart glasses, and in particularly to a pair of smart glasses.

### BACKGROUND

Currently, in order to conceal some electronic components, smart glasses generally need to have receiving cavities in the temples to mount electronic components and other electronic parts. To protect electronic components, the receiving cavities are usually made of rigid materials. Meanwhile, most smart glasses use plastic temples, which means that the temples of smart glasses are rigid and non-bendable. As a result, the temples cannot match the wearer's head shape, leading to poor stability and comfort when worn.

### SUMMARY

This application provides a pair of smart glasses, which can solve the problem that the temples of smart glasses cannot match the wearer's head shape, leading to poor stability and comfort when worn.

In the first aspect, this application provides a pair of smart glasses, the smart glasses include a display module, a frame module, and a battery module;
the display module includes an optical engine assembly and a waveguide assembly, the waveguide assembly is configured to receive display light emitted by the optomechanical component and form outgoing light;
the frame module includes a frame assembly and a temple assembly connected to the frame assembly, the frame assembly is connected to the waveguide assembly, and both the optical engine assembly and the waveguide assembly are mounted on the frame assembly; the temple assembly includes a temple and a flexible connector provided in the temple;
the battery module is connected to an end of the temple that is away from the frame assembly, and the battery module is electrically connected to the optical engine assembly via the flexible connector;
wherein the temple is flexible, such that the temple deforms according to a wearer's head size and head shape.

Alternatively, the flexible connector includes a flexible printed circuit board.

Alternatively, a receiving groove is formed within the temple, and the flexible printed circuit board is housed in the receiving groove and closely fits within the receiving groove.

Alternatively, the flexible printed circuit board mounted in the temple is sealed and molded using by means of in-mold injection molding to form the temple assembly.

Alternatively, the temple, the flexible printed circuit board and a stiffener are pressed together by means of adhesive dispensing or hot-press lamination to form the temple assembly.

Alternatively, the temple assembly further includes a flexible member, the flexible member includes a first connecting part, and the temple includes a second connecting part; the flexible member engages with the temple via the first connecting part and the second connecting part to seal the flexible connector.

Alternatively, the first connecting part includes a groove part, the second connecting part includes a protrusion part, and the protrusion part is formed on a surface of the temple via in-mold injection molding.

Alternatively, the material of the temple includes flexible metal or flexible sheet.

Alternatively, a mounting position of the battery module on the temple is collectively determined based on a weight of the battery module, a weight of the display module, and a weight of the frame assembly.

Alternatively, a mounting position of the battery module on the temple is determined relative to a wearer's ear part.

Alternatively, the temple is further configured to be bent with a preset arc in a first direction, forming an earpiece at the end of the temple that is away from the frame assembly, and the earpiece is configured to be adapted to a shape of the wearer's ear to make the smart glasses fit stable; wherein the first direction is a direction perpendicular to the temple.

Alternatively, an angle corresponding to the preset arc is determined relative to the shape and a position of the wearer's ear.

Alternatively, the angle corresponding to the preset arc is greater than or equal to 150° and less than or equal to 180°.

Alternatively, the battery module is provided in the earpiece.

Alternatively, the smart glasses include a main control module, and the main control module is electrically connected to the battery module and for controlling the optical engine assembly to emit light.

Alternatively, the main control module is provided at the end of the temple that is away from the frame assembly, and the main control module is connected to the optical engine assembly through the flexible connector.

Alternatively, the battery module and the main control module are relatively fixedly provided or integrally provided.

Alternatively, the smart glasses include a sensor module, the sensor module is provided at an end of the temple that is away from the frame assembly, configured to be electrically connected to the battery module via the flexible connector, and further configured to monitor the wearer's physical condition.

Alternatively, the smart glasses further include a counterweight module, the counterweight module is connected to the end of the temple that is away from the frame assembly, and the counterweight module is configured to balance two ends of the temple.

Alternatively, if a weight of the counterweight module is fixed, a mounting position of the counterweight module on the temple is determined based on a weight of the battery module, a weight of the display module, and a weight of the frame assembly.

Alternatively, if a mounting position of the counterweight module on the temple is fixed, a weight of the counterweight module is determined based on a weight of the battery module, a weight of the display module, and a weight of the frame assembly.

Alternatively, the counterweight module is connected to the temple via magnetic attachment.

Alternatively, the battery module is connected to the temple via adhesive dispensing.

Alternatively, the frame assembly includes a lens mounting member and a temple connector connected to the temple assembly and the lens mounting member; wherein the waveguide assembly is connected to a side of the lens mounting member that is away from the temple connector.

Alternatively, an optomechanical receiving cavity is formed on a side of the lens mounting member that is close to the temple assembly, and the optical engine assembly is accommodated in the optomechanical receiving cavity.

Alternatively, a straight-line distance between the optical engine assembly and the wearer's head is greater than 20 mm.

Alternatively, the main control module is accommodated in the optomechanical receiving cavity, the main control module is connected to the optical engine assembly, and the main control module is electrically connected to the battery module through the flexible connector.

Alternatively, the main control module and the optical engine assembly are relatively fixedly provided or integrally provided.

Alternatively, a volume of the optical engine assembly is less than 0.3 cm³.

Alternatively, the lens mounting member includes a first lens mounting frame, a second lens mounting frame, and a nose pad; the first lens mounting frame is connected to the temple connector and is configured to be connected to the waveguide assembly; the second lens mounting frame is connected to another temple connector and is configured to be connected to the waveguide assembly; the nose pad is configured to connect the first lens mounting frame and the second lens mounting frame.

Alternatively, the nose pad is made of a flexible material.

Alternatively, a parameter of the nose pad is determined based on a shape of the wearer's nose.

Alternatively, the parameter of the nose pad includes one or more of height, spacing, angle, and shape.

Alternatively, the smart glasses further include a diopter module, the diopter module includes a first diopter lens and/or a second diopter lens, the first diopter lens is provided on a first surface of the waveguide assembly, and the second diopter lens is provided on a second surface of the waveguide assembly.

Alternatively, the diopter module and the waveguide assembly are relatively fixedly provided or integrally provided.

This application provides a pair of smart glasses. The smart glasses include a display module, a frame module, and a battery module; the display module includes an optical engine assembly and a waveguide assembly, the waveguide assembly is configured to receive display light emitted by the optical engine assembly and form outgoing light; the frame module includes a frame assembly and a temple assembly connected to the frame assembly, the frame assembly is connected to the waveguide assembly, and both the optical engine assembly and the waveguide assembly are mounted on the frame assembly;the temple assembly includes a temple and a flexible connector provided in the temple; the battery module is connected to an end of the temple that is away from the frame module, and the battery module is electrically connected to the optical engine assembly via the flexible connector; since the temples have flexibility, the temples can be bent into a curved shape, deforming according to the wearer's head size and head shape. This enables the smart glasses to adapt to different head shapes, forming a wrapping effect around the wearer's head, and thereby improving wearing stability and comfort.

### BRIEF DESCRIPTION OF THE DRAWINGS

In order to clearly illustrate the technical solutions in the embodiments of this application, the following will briefly introduce the drawings used in the description of the embodiments. Apparently, the drawings in the following description are some embodiments of this application. For those of ordinary skill in the art, without making any creative efforts, other drawings can be obtained based on these drawings.
FIG. 1 is a structural schematic diagram of a pair of smart glasses in related art provided by an embodiment of this application.
FIG. 2 is a structural schematic diagram of a pair of smart glasses provided by an embodiment of this application.
FIG. 3 is a structural schematic diagram of another pair of smart glasses provided by an embodiment of this application.
FIG. 4 is a sectional structure schematic diagram of a temple provided by an embodiment of this application.
FIG. 5 is a sectional structure schematic diagram of another temple provided by an embodiment of this application.
FIG. 6 is a structural schematic diagram of another temple provided by an embodiment of this application.
FIG. 7 is a structural schematic diagram of an earpiece provided by an embodiment of this application.
FIG. 8 (a) is a structural schematic diagram of another earpiece provided by an embodiment of this application.
FIG. 8 (b) is a structural schematic diagram of another earpiece provided by an embodiment of this application.
FIG. 9 is a structural schematic diagram of a frame assembly provided by an embodiment of this application.
FIG. 10 (a) is a structural schematic diagram of a lens mounting member provided by an embodiment of this application.
FIG. 10 (b) is a structural schematic diagram of another lens mounting member provided by an embodiment of this application.
FIG. 11 (a) is a structural schematic diagram of a diopter module provided by an embodiment of this application.
FIG. 11 (b) is a structural schematic diagram of another diopter module provided by an embodiment of this application.

### DETAILED DESCRIPTION

The technical solution of embodiments of this application is clearly and completely described in detail in connection with the accompanying drawings. Apparently, described embodiments are some embodiments of this application, not all embodiments. Based on embodiments of this application, all other embodiments obtained by those of ordinary skill in the art without creative efforts are within the scope of this application.

The flowcharts shown in the drawings are merely for illustrative purposes. They do not necessarily include all the content and operations/steps, nor do they have to be executed in the described order. For example, some operations/steps can be further split, combined, or partially merged, so the actual execution order may change according to the actual situation.

It should be understood that the terms used in the specification of this application are merely for the purpose of describing specific embodiments and are not intended to limit this application. As used in the specification of this application and the appended claims, unless the context clearly dictates otherwise, the singular forms "a", "an", and "the" are intended to include the plural forms.

It should be further understood that the term "and/or" used in the specification and the claims of this application refers to any combination and all possible combinations of one or more of the items listed in association, and includes these combinations.

The following is a detailed description of some embodiments of this application in connection with the accompanying drawings. In no conflicting situations, the embodiments and features within the embodiments described below can be combined with each other.

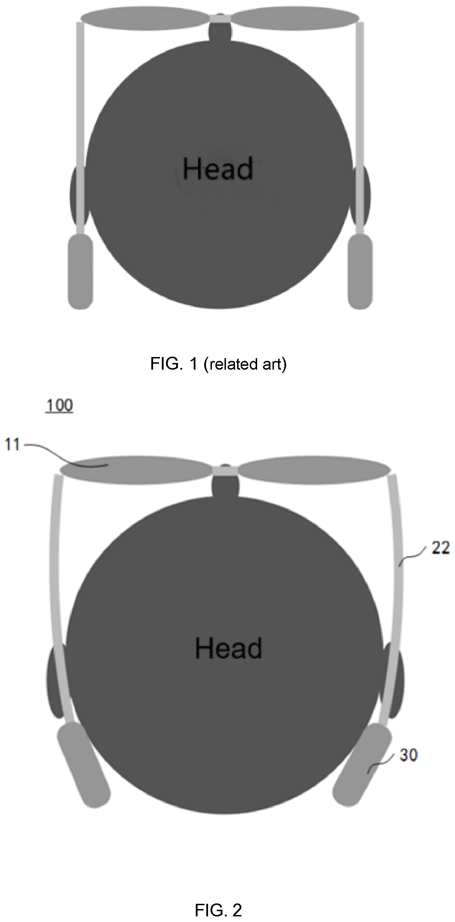

As shown in FIG. 1, most smart glasses use plastic temples, which means that the temples of smart glasses are rigid and non-bendable. As a result, the temples cannot match the wearer's head shape. They cannot form a wrapping effect around the wearer's head, leading to poor stability and comfort when worn.

To address the above-mentioned deficiencies in the prior art, this application proposes a pair of smart glasses. The temples of the smart glasses have flexibility, allowing the temples to bend into a curved shape and deform according to the wearer's head size and head shap. This, enables the smart glasses to adapt to different head shapes, forming a wrapping effect around the wearer's head, and thereby improving wearing stability and comfort.

Exemplarily, the smart glasses can be AR (Augmented Reality) glasses, VR (Virtual Reality) glasses, or any other electronic device applied to AR imaging, such as smart wearable devices like smart helmets, without specific limitations herein.

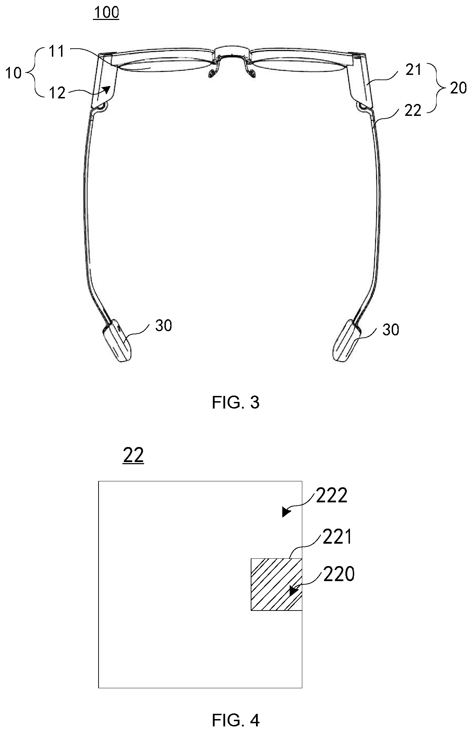

Please refer to FIG. 2 and FIG. 3. FIG. 2 is a structural schematic diagram of a pair of smart glasses provided by an embodiment of this application; FIG. 3 is a structural schematic diagram of another pair of smart glasses provided by an embodiment of this application.

As shown in FIGS. 2 and 3, the smart glasses 100 include a display module 10, a frame module 20, and a battery module 30. The display module 10 can include an optical engine assembly 12 and a waveguide assembly 11. The waveguide assembly 11 is configured to receive display light emitted by the optical engine assembly 12 and form outgoing light. Specifically, the waveguide assembly 11 is provided with a waveguide substrate, a coupled-in grating region, and a coupled-out grating region. The optical engine assembly 12 is connected to the frame assembly 21 and is provided corresponding to the coupled-in grating region. Wherein the coupled-in grating region and the coupled-out grating region can be provided on the waveguide substrate, the coupled-in grating region is used to couple light into the waveguide substrate, and the coupled-out grating region is used to couple out light transmitted within the waveguide substrate. Light emitted by the optical engine assembly 12 is incident into the coupled-in grating region, and the light diffracted by the coupled-in grating region can form total internal reflection in the waveguide substrate, thereby transmitting transversely within the waveguide assembly 11 until it is diffracted again by the coupled-out grating region and then reaches the human eyes for imaging.

Exemplarily, the coupled-in grating region and the coupled-out grating region can also be provided on different surfaces of the waveguide substrate. For example, the coupled-in grating region is provided on the first surface of the waveguide substrate, and the coupled-out grating region is provided on the second surface of the waveguide substrate; or the coupled-out grating region is provided on the first surface of the waveguide substrate, and the coupled-in grating region is provided on the second surface of the waveguide substrate. It only needs to achieve that the coupled-in grating region can couple light into the waveguide substrate, and the coupled-out grating region can couple out light transmitting within the waveguide substrate.

The frame module 20 includes a frame assembly 21 and a temple assembly 22 connected to the frame assembly 21. The frame assembly 21 is connected to the waveguide assembly 11, and both the optical engine assembly 12 and the waveguide assembly 11 are mounted on the frame assembly 21; the temple assembly 22 includes a temple and a flexible connector provided inside the temple. The battery module 30 is connected to one end of the temple that is away from the frame assembly 21, and the battery module 30 is electrically connected to the optical engine assembly 12 through the flexible connector.

Wherein the flexible connector can be a circuit connector with flexibility, such as a flexible printed circuit (FPC) or bendable electrical components such as flexible wires, etc. The flexible connector is used to electrically connect the battery module 30 and the optical engine assembly 12, so that the battery module 30 provided at the rear end of the temple can supply power to the optical engine assembly 12 through the flexible connector inside the temple.

In related art, smart glasses generally need to have receiving cavities in the temples to install electronic components and other electronic parts. In order to avoid damaging the electronic components, which are generally non-bendable, the temples of smart glasses in the related art are all rigid and non-bendable.

As shown in FIGS. 2 and 3, in the embodiments of this application, components such as the optical engine assembly 12 and the waveguide assembly 11 are provided on the frame assembly 21, while the battery module 30 is provided at the rear end of the temple. This configuration avoids the need to house electronic components inside the temples. And by the flexible connector within the temple, the temple is flexible, allowing it to bend into a curved shape and deform according to the wearer's head size and shape. This enables the smart glasses 100 to adapt to different head shapes, forming a wrapping effect around the wearer's head, and thereby improving wearing stability and comfort.

In some embodiments, the flexible connector can include a flexible printed circuit board (FPC). Thereby, the electrical connection between the battery module 30 and the optical engine assembly 12 can be realized through a printed circuit board with high reliability and excellent flexibility.

Wherein the flexible printed circuit board is a highly reliable and excellently flexible printed circuit board made of polyimide or polyester film as the base material. It has the characteristics of high wiring density, light weight, thin thickness, and good bendability.

Due to the characteristics of flexible printed circuit board, such as high wiring density, light weight, thin thickness, and good bendability, it can be used as the electrical connection medium between the battery module 30 and the optical engine assembly 12. Meanwhile, by providing the flexible printed circuit board inside the temple, as long as the temple is made of flexible materials, the temple assembly 22 can achieve having flexibility, enabling the temple to deform according to the wearer's head size and shape.

As shown in FIG. 4, in some embodiments, a receiving groove 221 is formed within the temple 222, and the flexible printed circuit board is accommodated within the receiving groove 221 and is closely fit within the receiving groove221. Thus, the receiving groove 221 can be formed by in-mold injection molding within the temple 222, and the flexible printed circuit board is placed into the receiving groove 221 and then embedded with the temple 222 using plastic. This results in the temple 222 produced by in-mold injection molding having high reliability and being easy for mass production.

Exemplarily, the temple 222 and the flexible printed circuit board can be hermetically bonded with soft, skin-friendly materials such as silica gel and rubber through in-mold injection molding, so that the temple 222 produced by in-mold injection molding have the effects of waterproofing, dustproofing, sweatproofing, and easy bending processing.

Exemplarily, the flexible printed circuit board and the titanium alloy temple 222 can also be produced by a stiffener of FPC. The flexible printed circuit board, temple 222 and stiffener of FPC are integrally formed through methods such as adhesive dispensing or hot-press lamination.

In some embodiments, the flexible printed circuit board mounted in the temple 222 is sealed and molded using in-mold injection molding to form the temple assembly22. In this way, the flexible printed circuit board and the temple 222 can be embedded together through in-mold injection molding, so that the temple 222 obtained by in-mold injection molding has high reliability and is easy for mass production.

Specifically, the temple 222 and the flexible printed circuit board are hermetically bonded with soft, skin-friendly materials such as silica gel and rubber through in-mold injection molding, so that the temple 222 produced by in-mold injection molding have the effects of waterproofing, dustproofing, sweatproofing, and easy bending processing. After the temple 222 and the flexible printed circuit board are integrally formed, the temple 222 can still be adjusted in width and the degree of curvature of the arc based on the human face, thus greatly improving wearing comfort. At the same time, the silica gel formed integrally via in-mold injection molding is not easy to fall off, which can well ensure the comfortable touch of the contact surface between the temple 222 and the human face.

Exemplarily, the metallic temple 222 and the flexible printed circuit board can be used as inserts and installed in a mold. Parameters for in-mold injection molding, such as temperature, pressure, and time, can be set. Then, soft, skin-friendly materials such as silica gel and rubber are added to the material hopper system of the injection machine. The injection machine is started to inject the fused soft, skin-friendly material into the mold for in-mold injection molding. After the in-mold injection molding is completed, the injected silica gel is already integrated with the temple 222, sandwiching the flexible printed circuit board between the silica gel and the temple 222. The mold and the injected member are cooled to room temperature, and the injected member is removed from the mold. At this time, the injected member taken out from the mold is the temple assembly 22.

In some embodiments, the temple 222, flexible printed circuit board and stiffener can be pressed together by adhesive dispensing or hot-press lamination to form the temple assembly 22. In this way, the flexible printed circuit board and temple 222 can be embedded together through the stiffener of FPC, which can highlight the metallic texture of the temple 222 and ensure that the temple 222 obtained by in-mold injection molding has high reliability.

Specifically, the flexible printed circuit board and the titanium alloy temple 222 can also be produced by a stiffener of FPC. The temple 222, the flexible printed circuit board, and the stiffener are pressed together via adhesive dispensing or hot-press lamination to form the temple assembly 22. The integrally formed temple assembly 22 will be configured so that the side with the titanium alloy faces outwards (i.e., the side away from the wearer's head), and the side with the flexible printed circuit board faces inwards (i.e., the side close to the wearer's head). This can highlight the metallic texture of the titanium alloy temple 222, while the inner flexible printed circuit board can be surface-coated with glue to make the temple 222 have the effects of waterproofing, sweatproofing, dustproofing, and skin-friendliness. The bonding method of the stiffener of FPC can further compress the space of the temple 222 while ensuring the flexible adjustment of the bend of the temple 222.

It should be noted that soft, skin-friendly materials such as silica gel and rubber can be used for brushing glue on the surface. In addition, the temple 222, the flexible printed circuit board and soft, skin-friendly materials such as silica gel and rubber are hermetically bonded through in-mold injection molding, so that the temple 222 produced by in-mold injection molding have the effects of waterproofing, dustproofing, sweatproofing, and easy bending processing. It can also provide silica gel sleeves or rubber sleeves on the side of the temple 222 close to the wearer's head, so that the temple 222 with the silica gel sleeves or rubber sleeves can also achieve the effects of waterproofing, dustproofing, sweatproofing, and easy bending processing.

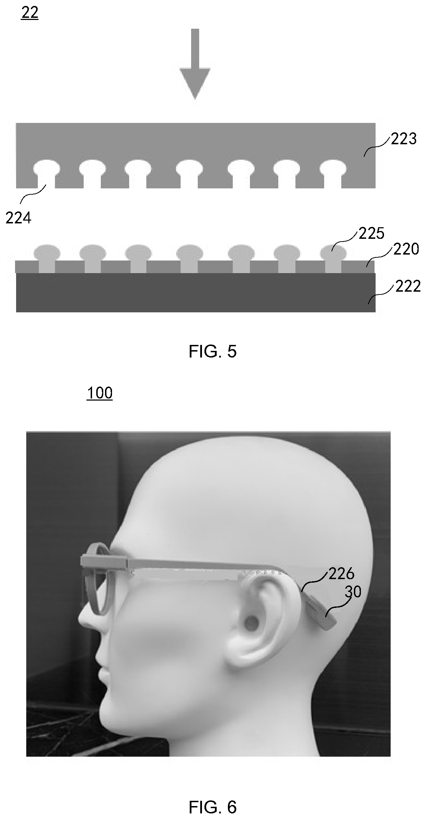

As shown in FIG. 5, in some embodiments, the temple assembly 22 further includes a flexible member 223. The flexible member 223 includes a first connecting part 224, and the temple 222 includes a second connecting part 225. The flexible member 223 engages with the temple 222 through the first connecting part 224 and the second connecting part 225 to seal the flexible connector 220. This facilitates the disassembly and replacement of the flexible member 223, avoiding the problem of the flexible member 223 turning yellow due to long-term wearing of the smart glasses 100.

Wherein the flexible member 223 can be a component made of soft, skin-friendly materials, such as a formed silica gel strip or rubber strip.

Specifically, the flexible member 223 includes a first connecting part 224, and the temple 222 includes a second connecting part 225. The first connecting part 224 can cooperate with the second connecting part 225 to snap-fit the flexible member 223 onto the temple 222. Meanwhile, the flexible connector 220 can be attached to the side of the temple 222 that includes the second connecting part 225. Thus, when the first connecting part 224 and the second connecting part 225 cooperate with each other, the flexible connector 220 can be sandwiched between the flexible member 223 and the temple 222, thereby sealing the flexible connector 220 to form the temple assembly 22.

Exemplarily, the flexible connector 220 can be pre-attached to the side of the temple 222 including the second connecting part 225 by means of glue or adhesive dispensing, so that when the first connecting part 224 and the second connecting part 225 cooperate with each other, the flexible connector 220 can be sandwiched between the flexible member 223 and the temple 222.

It should be noted that the flexible member 223 can include a plurality of first connecting parts 224, and the temple 222 can include a plurality of second connecting parts 225. Each first connecting part 224 corresponds to a second connecting part 225, so that each first connecting part 224 cooperates with its corresponding second connecting part 225. This improves the stability of the cooperation, ensures that the flexible connector 220 is sandwiched between the flexible member 223 and the temple 222, and enhances the fit between the flexible member 223 and the temple 222.

In some embodiments, the first connecting part 224 includes a groove part, and the second connecting part 225 includes a protrusion part. The protrusion part is formed on the surface of the temple 222 via in-mold injection molding. This facilitates the disassembly and replacement of the flexible member 223, avoiding the problem of the flexible member 223 turning yellow due to long-term wearing of the smart glasses 100, and also provides users with the functionality to disassemble and customize the flexible member 223.

Wherein the protrusion part can be a plastic protrusion, which can be formed by in-mold injection molding or other means.

As shown in FIG. 5, specifically, the first connecting part 224 can include a groove part, and the second connecting part 225 can include a protrusion part. When the first connecting part 224 and the second connecting part 225 cooperate with each other, the protrusion part is inserted into the corresponding groove part, so that the protrusion part and the corresponding groove part achieve a snap-fit engagement. After the protrusion part and the corresponding groove part achieve the snap-fit engagement, the flexible connector 220 can be sandwiched between the flexible member 223 and the temple 222, thereby sealing the flexible connector 220 to form the temple assembly 22.

Exemplarily, the protrusion part can be formed on the plane of the temple 222 close to the wearer by means of in-mold injection molding. Then, corresponding groove part is made on the flexible member 223 to cooperate with the protrusion part, thereby achieving a mechanical snap-fit structure to connect the temple 222, the flexible connector 220, and the flexible member 223. This facilitates the disassembly and replacement of the flexible member 223, avoiding the problem of the flexible member 223 turning yellow due to long-term wearing of the smart glasses 100, and also provides users with the functionality to disassemble and customize the flexible member 223.

Exemplarily, since the flexible member 223 is made of a flexible material, when the user needs to replace the flexible member 223, the user can remove the flexible member 223 by applying external force, so as to realize the replacement of the flexible member 223 and improve the user's wearing experience.

In some embodiments, the second connecting part 225 includes a groove part, and the first connecting part 224 includes a protrusion part. The protrusion part is formed on the surface of the flexible member 223 via in-mold injection molding. This provides another snap - fit structure, while achieving the effect of facilitating the disassembly and replacement of the flexible member 223, avoiding the problem of the flexible member 223 turning yellow due to long-term wearing of the smart glasses 100, and also providing users with the functionality to disassemble and customize the flexible member 223.

Specifically, the first connecting part 224 can include a protrusion part, and the second connecting part 225 can include a groove part. When the first connecting part 224 and the second connecting part 225 cooperate with each other, the protrusion part is inserted into the corresponding groove part, so that the protrusion part and the corresponding groove part achieve a snap-fit engagement. After the protrusion part and the corresponding groove part achieve the snap-fit engagement, the flexible connector 220 can also be sandwiched between the flexible member 223 and the temple 222, thereby sealing the flexible connector 220 to form the temple assembly 22.

Exemplarily, the protrusion part can be formed on the flexible member 223 by means of in-mold injection molding. Then, corresponding groove part is made on the plane of the temple 222 close to the wearer to cooperate with the protrusion part, thereby achieving a mechanical snap-fit structure to connect the temple 222, the flexible connector 220, and the flexible member 223. This facilitates the disassembly and replacement of the flexible member 223, avoiding the problem of the flexible member 223 turning yellow due to long-term wearing of the smart glasses 100, and also provides users with the functionality to disassemble and customize the flexible member 223.

It should be noted that if the flexible member 223 includes a plurality of first connecting parts 224, the temple 222 includes a plurality of second connecting parts 225. Each groove part corresponds to a protrusion part, so that each groove part and its corresponding protrusion part achieve the snap-fit engagement, thereby improving the stability of the engagement, enabling the flexible connector 220 to be sandwiched between the flexible member 223 and the temple 222, and enhancing the fit between the flexible member 223 and the temple 222.

In some embodiments, the material of the temple 222 includes flexible metal or flexible sheet. Thereby, the temple 222 itself can have flexibility, allowing it to be bent into a curved shape.

Wherein the flexible metal can include memory metal, etc. Memory metal can undergo plastic deformation within a certain temperature range and can also recover its original macroscopic shape within another temperature range. Memory metal can include copper-based memory alloy, nickel-titanium alloy, iron-based alloy, cobalt-based alloy, and titanium-based alloy, etc. The flexible sheet can include metal sheet or soft plastic sheet, as long as the sheet can achieve flexible bending.

In some embodiments, the mounting position of the battery module 30 on the temple 222 is collectively determined based on the weight of the battery module 30, the weight of the display module 10, and the weight of the frame assembly 21. This allows the front and rear ends of the temple 222 to achieve balance, thereby balancing the centre of gravity of the smart glasses 100 and reducing the discomfort caused by the downward pressure of the nose pads on the bridge of the nose during wearing.

Wherein the battery module 30 can be provided at any position of the temple 222. Instead of being provided inside the temple 222, the battery module 30 is mounted on the temple 222 by means of adhesive dispensing. Therefore, the installation of the battery module 30 does not affect the flexibility of the temple 222, which can still deform according to the wearer's head size and shape. Meanwhile, the battery module 30 is connected to the flexible connector 220, thereby electrically connecting with the optical engine assembly 12 through the flexible connector 220 to supply power to the optical engine assembly 12 and other components.

Specifically, the mounting position of the battery module 30 on the temple 222 is determined based on the weight of the battery module 30, the weight of the display module 10, and the weight of the frame assembly 21. In the embodiments of this application, since the battery module 30 is provided at the rear end of the temple 222, the display module 10 and the frame assembly 21 are provided at the front end of the temple 222, and the position of the display module 10 and the frame assembly 21 are generally fixed, the mounting position of the battery module 30 on the temple 222 can be adjusted based on law of the lever to achieve balance between the front and rear ends of the temple 222. This balances the centre of gravity of the smart glasses 100 and enhances the wearing comfort for users.

At present, components such as the nose pad, chip, sensor, and battery of the smart glasses 100 are mostly integrated in the frame or the lug, resulting in the frame of the smart glasses 100 being heavy. Especially, the battery is relatively heavy, which causes an imbalance in the front and rear weights of the glasses and makes the wearer uncomfortable. In the embodiments of this application, by providing the battery module 30 at the rear end of the temple 222, and providing the display module 10 and the frame assembly 21 at the front end of the temple 222, on the premise of enabling the temple 222 to have flexibility, the front and rear ends of the temple 222 can be balanced, thereby balancing the centre of gravity of the smart glasses 100, reducing the discomfort caused by the downward pressure of the nose pad on the bridge of the nose, and improving the wearing comfort of users.

In some embodiments, the mounting position of the battery module 30 on the temple 222 is determined based on the position of the wearer's ear. Thereby, the battery module 30 can be provided behind the wearer's ear, so as to reasonably hide the battery module 30 behind the ear, visually enhancing the sense of lightness of the smart glasses 100 when worn.

Exemplarily, if the position of the wearer's ear is relatively rearward, the battery module 30 is positioned at a relatively rearward position on the temple 222; if the position of the wearer's ear is relatively forward, the battery module 30 is positioned at a relatively forward position on the temple 222. Therefore, the mounting position of the battery module 30 on the temple 222 can be adjusted based on the position of the ear, enabling the battery module 30 to be designed behind the ear. When the smart glasses 100 are worn normally, the ears can serve as a visual shield, effectively concealing the battery module behind the ear. This design visually enhances the sense of lightness when worn.

In the embodiments of this application, the mounting position of the battery module 30 on the temple 222 is determined based on the position of the wearer's ear. By utilizing the visual principle of the battery module 30 being positioned at the rear and concealed behind the ear, the smart glasses 100 can use the ear as a visual shield, achieving a lighter and more simple appearance when worn.

As shown in FIG. 6, in some embodiments, the temple 222 is further configured to be bent with a preset arc in a first direction, forming an earpiece 226 at an end of the temple 222 that is away from the frame assembly 21. The earpiece 226 is configured to be adapted to the shape of the wearer's ear to achieve a secure fit when the glasses are worn. Therefore, through the ear-hooking design of the smart glasses 100, the overall wearing stability can be enhanced. By adapting to the shapes of the wearer's ears, the glasses can be fixed in place, thereby improving the wearing stability of the smart glasses 100.

Wherein the first direction is a direction perpendicular to the temple 222, i.e., the standing direction of the wearer's body. The preset arc can be determined based on the shape of the wearer's ear, and can be any arc, which is not specifically limited herein.

Specifically, since the wearer's ear is generally located at the rear end of the temple 222, the bending starting point of the earpiece 226 can be provided at the rear end of the temple 222 based on the shape and position of the wearer's ear, and the temple 222 can be bent based on the preset arc.

In the embodiments of this application, an earpiece 226 matching the shape of the wearer's ear can be provided at the rear end of the temple 222. This can cooperate with the shape of the wearer's ear to fix the glasses in place, thereby enhancing the wearing stability of the smart glasses 100.

As shown in FIG. 6, in some embodiments, the battery module 30 can be provided on the earpiece 226. Therefore, through the ear-hooking design with the battery module 30 of the smart glasses 100 placed at the rear, the wearing stability of the smart glasses 100 can be further enhanced. By adapting to the shapes of the wearer's ears, the glasses can be fixed in place, thereby improving the wearing stability of the smart glasses 100.

Wherein the battery module 30 can be provided on the earpiece 226 of the temple 222. Instead of being provided inside the temple 222, the battery module 30 is mounted on the earpiece 226 by means of adhesive dispensing. Therefore, the installation of the battery module 30 does not affect the flexibility of the temple 222, which can still deform according to the wearer's head size and shape. Meanwhile, the battery module 30 is connected to the flexible connector 220, thereby electrically connecting with the optical engine assembly 12 through the flexible connector 220 to supply power to the optical engine assembly 12 and other components.

Specifically, by providing the battery module 30 on the earpiece 226, on the basis of reducing the wearing discomfort caused by the downward pressure of the nose pad on the bridge of the nose, and by the ear-hooking design with the battery pack placed at the rear, the wearing stability of the smart glasses 100 can be enhanced. Meanwhile, the downward pressure applied behind the ear can increase the friction between the silicone on the temple 222 and the ear contact surface. Moreover, due to the wrapping effect of the flexible temple on the head, the contact area and friction between the battery module 30 and the head are also increased, thereby further improving the wearing stability of the glasses.

In some embodiments, the angle corresponding to the preset arc is determined based on the shape and position of the wearer's ear. Thus, the angle corresponding to the preset arc can be determined based on the shape and position of the wearer's ear, enabling the earpiece 226 to better fit the wearer's ear and head, and improving wearing stability and comfort.

Wherein the angle corresponding to the preset arc can be any angle, such as 150°, which is not specifically limited herein.

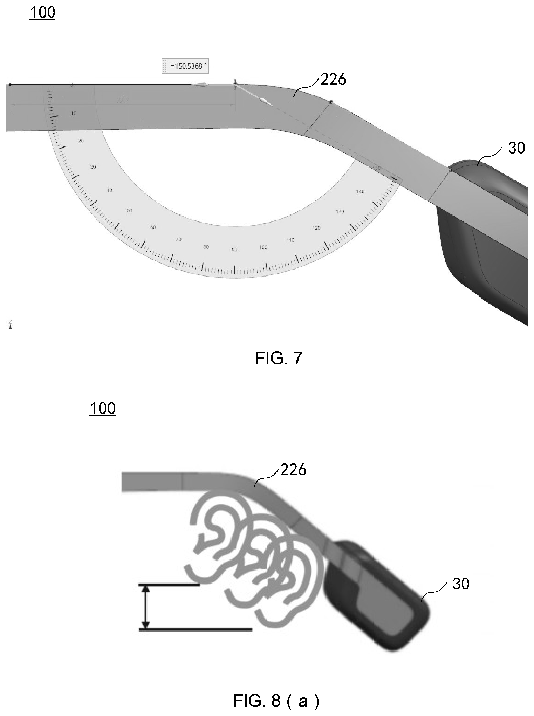

As shown in FIG. 7, exemplarily, the temple 222 is further configured to be bent with a preset arc in a first direction, so that an end of the temple 222 that is away from the frame assembly 21 forms an earpiece 226. The angle corresponding to the preset arc can be 150°, which can be specifically determined based on the shape and position of the wearer's ear .

In some embodiments, the angle corresponding to the preset arc is greater than or equal to 150° and less than or equal to 180°. Since the adjustable temple 222 is used to wrap the side of the head, the bending amplitude of the earpiece 226 can be reduced, that is, the angle corresponding to the preset arc is increased, avoiding affecting the wearing of the smart glasses 100. Meanwhile, the smart glasses 100 can be adapted to the head shapes and ear parts of more wearers.

As shown in FIG. 8 (a), to improve the wearing stability of the smart glasses 100, it is generally necessary to make the bending amplitude of the earpiece 226 large, i.e., the angle corresponding to the preset arc is relatively small. This is because a relatively small angle allows the earpiece 226 to better cooperate with the wearer's ear to achieve stable wearing. However, if the angle corresponding to the preset arc is relatively small, for example, the angle corresponding to the preset arc is within the range of 90° to 140°, the bending amplitude of the earpiece 226 is relatively large, and the lifting height of the earpiece 226 of the smart glasses 100 is large, which will affect the wearing of the smart glasses 100 and even cause the wearer to experience dizziness.

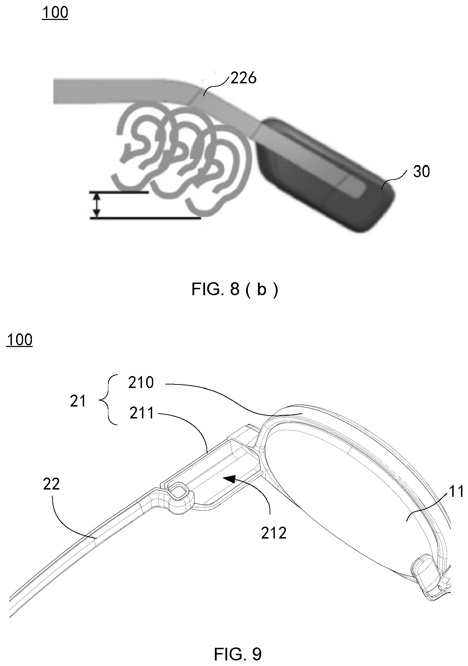

As shown in FIG. 8 (b), the embodiments of this application utilize the adjustable temple 222 to wrap the side of the head, so that the earpiece 226 can achieve stable wearing without excessive bending amplitude. Therefore, the bending amplitude of the earpiece 226 can be reduced, that is, the angle corresponding to the preset arc is increased. For example, the angle corresponding to the preset arc can be in the range of 150° to 180°. At this time, the bending amplitude of the earpiece 226 is relatively small, and the lifting height of the earpiece 226 of the smart glasses 100 is small, which basically does not affect the wearing of the smart glasses 100. Meanwhile, the smart glasses 100 can be adapted to the head shapes and ear parts of more wearers.

In some embodiments, the smart glasses 100 further include a counterweight module connected to an end of the temple 222 that is away from the frame assembly 21. The counterweight module is configured to balance the two ends of the temple 222. When the battery module 30 provided on the temple 222 alone fails to balance the two ends of the temple 222, the counterweight module achieves balancing the two ends of the temple 222, thereby reducing the wearing discomfort caused by the downward pressure of the nose pad on the bridge of the nose and improving wearing comfort.

If the weight of the display module 10 and the weight of the frame assembly 21 are much greater than that of the battery module 30, and if providing the battery module 30 alone on the temple 222 still fails to balance the two ends of the temple 222, a counterweight module needs to be provided on the temple 222 to achieve the balance of the two ends of the temple 222.

Specifically, by providing the counterweight module at an end of the temple 222 that is away from the frame assembly 21, the battery module 30 and the counterweight module can provide more downward pressure at the rear end of the glasses to balance the pressure at the front end of the glasses, thereby further solving the problem of excessive downward pressure of the nose pad. A balancing lever can be formed by using the ear as a fulcrum. The increase in downward pressure at the rear end of the temple 222 helps reduce the downward pressure of the nose pad, ensuring that the bridge of the wearer's nose will not form pressure marks even after long-term wearing of the smart glasses 100.

In some embodiments, if a weight of the counterweight module is fixed, a mounting position of the counterweight module on the temple 222 is determined based on the weight of the battery module 30, the weight of the display module 10, and the weight of the frame assembly 21. Thus, when the weight of the counterweight module is fixed, the front and rear ends of the temple 222 can be balanced by adjusting the mounting position of the counterweight module on the temple 222, so as to balance the centre of gravity of the smart glasses 100 and improve the wearing comfort of users.

Wherein the counterweight module can be provided at any position of the temple 222. Instead of being provided inside the temple 222, the counterweight module is mounted on the temple 222 by means of adhesive dispensing or magnetic attachment, etc. Therefore, the installation of the counterweight module does not affect the flexibility of the temple 222, which can still deform according to the wearer's head size and shape. Meanwhile, the battery module 30 is connected to the flexible connector 220, thereby electrically connecting with the optical engine assembly 12 through the flexible connector 220 to supply power to the optical engine assembly 12 and other components.

Specifically, if the weight of the counterweight module is fixed, by providing the battery module 30 and the counterweight module at the rear end of the temple 222 and providing the display module 10 and the frame assembly 21 at the front end of the temple 222, on the premise of enabling the temple 222 to have flexibility, the specific position of the counterweight module on the temple 222 can be adjusted by using the law of the lever to balance the front and rear ends of the temple 222. Therefore, the centre of gravity of the smart glasses 100 is balanced, the wearing discomfort caused by the downward pressure of the nose pad on the bridge of the nose is reduced, and the wearing comfort of users is improved.

In some embodiments, if the mounting position of the counterweight module on the temple 222 is fixed, the weight of the counterweight module is determined based on the weight of the battery module 30, the weight of the display module 10, and the weight of the frame assembly 21. Thus, when the mounting position of the counterweight module on the temple 222 is fixed, the front and rear ends of the temple 222 can be balanced by adjusting the weight of the counterweight module, so as to balance the centre of gravity of the smart glasses 100 and improve the wearing comfort of users.

Wherein the counterweight module can be provided on the earpiece 226 of the temple 222 by means of magnetic attachment, etc., and the counterweight module and the battery module 30 can be provided together on the earpiece 226 of the temple 222.

Specifically, if the mounting position of the counterweight module on the temple 222 is fixed, by providing the battery module 30 and the counterweight module at the rear end of the temple 222, and providing the display module 10 and the frame assembly 21 at the front end of the temple 222, on the premise that the temple 222 have flexibility, the weight of the counterweight module is adjusted by using the law of the lever to balance the front and rear ends of the temple 222. Thereby, the centre of gravity of the smart glasses 100 is balanced, the wearing discomfort caused by the downward pressure of the nose pad on the bridge of the nose is reduced, and the wearing comfort of users is improved.

In some embodiments, the smart glasses 100 include a main control module. The main control module is electrically connected to the battery module 30, which is configured to control the optical engine assembly 12 to emit light. Thus, the battery module 30 can supply power to the main control module, thereby making the main control module control the optical engine assembly 12 to emit light.

Wherein the main control module can be a PCBA board, which refers to a product that solders integrated circuits, surface-mounted components and other electronic components on a PCB board to achieve circuit functions.

Exemplarily, the main control module can be provided at the rear end of the temple 222 by means of adhesive dispensing and so on, and can also be provided in the frame assembly 21. The position of the main control module is not specifically limited herein.

In some embodiments, the main control module is provided at an end of the temple 222 that is away from the frame assembly 21, and the main control module is connected to the optical engine assembly 12 through the flexible connector 220. Thus, the main control module can also be provided at the rear end of the temple 222, further reducing the volume and weight of the front end of the glasses, balancing the front and rear ends of the temple 222, balancing the centre of gravity of the smart glasses 100, reducing the wearing discomfort caused by the downward pressure of the nose pad on the bridge of the nose, and improving the wearing comfort of users.

Specifically, the main control module can also be provided at an end of the temple 222 that is away from the frame assembly 21 by means of adhesive dispensing, etc., and the main control module can be connected to the optical engine assembly 12 through the flexible connector 220, so as to control the optical engine assembly 12 to emit light. If the main control module and the battery module 30 are not integrally provided, the main control module can also be electrically connected to the battery module 30 through the flexible connector 220, so that the battery module 30 supplies power to the main control module.

In some embodiments, the battery module 30 and the main control module are relatively fixedly provided or integrally provided, thereby further reducing the overall volume of the smart glasses 100.

If the main control module and the battery module 30 are not integrally provided, it is necessary to respectively provide a housing for accommodating the main control module and a housing for accommodating the battery module 30 at the end of the temple 222 that is away from the frame assembly 21. This will cause the overall volume of the smart glasses 100 to be relatively large.

Specifically, the main control module can be provided inside the battery module 30, so that the battery module 30 and the main control module are relatively fixedly provided or integrally provided. At this time, the main control module does not need to be electrically connected to the battery module 30 through the flexible connector 220, and the battery module 30 can be directly connected to the main control module and supply power to the main control module.

In the embodiments of this application, the battery module 30 and the main control module are relatively fixedly provided or integrally provided, so as to further reduce the overall volume of the smart glasses 100 and realize the lightweight design of the smart glasses 100.

In some embodiments, the smart glasses 100 include a sensor module. The sensor module is provided at the end of the temple 222 that is away from the frame assembly 21, configured to be electrically connected to the battery module 30 through the flexible connector 220, and also configured to monitor the wearer's physical condition. By providing the sensor module at the rear end of the temple 222, it can make the sensor module better fit the user's head and skin, enabling more accurate real-time monitoring of the wearer's physical condition.

Wherein the sensor module can include a SpO2 sensor, a heartbeat sensor, an electroencephalogram sensor, and other sensors for monitoring different health indicators of the user.

Exemplarily, the sensor module can be separately provided at an end of the temple 222 that is away from the frame assembly 21, and electrically connected to the main control module and the battery module 30 through the flexible connector 220, thereby enabling real-time monitoring of the wearer's physical condition.

Exemplarily, the sensor module can be placed together with the main control module and provided at an end of the temple 222 that is away from the frame assembly 21. The sensor module can be electrically connected to the battery module 30 through the flexible connector 220. And the sensor module and the main control module are provided together, which makes the distance between the sensor module and the main control module relatively short, reducing the delay of the sensor module and making it respond faster.

Exemplarily, the sensor module and the main control module can be provided within the battery module 30. This enables the sensor module, main control module, and battery module 30 to be provided integrally, thereby reducing the volume of the smart glasses 100. The sensor module can better fit the user's head and skin, allowing for more accurate real-time monitoring of the wearer's physical condition.

Since the frame assembly 21 generally does not fit closely to the user's head and skin, if the sensor module is provided at the frame assembly 21, the sensor module cannot contact the user's head and skin, resulting in lower monitoring accuracy of the sensor module. As the rear end of the temple 222 generally fits the user's head and skin, the sensor module is provided at the rear end of the temple 222 in the embodiments of this application, enabling the sensor module to better fit the user's head and skin, thus allowing for more accurate real-time monitoring of the wearer's physical condition.

As shown in FIG. 9, in some embodiments, the frame assembly 21 includes a lens mounting member 210 and a temple connector 211 connecting with the temple assembly 22 and the lens mounting member 210. Wherein the waveguide assembly 11 is connected to a side of the lens mounting member 210 that is away from the temple connector 211. In this way, the temple assembly 22 and the waveguide assembly 11 can be connected through the lens mounting member 210 and the temple connector 211. The installation of the smart glasses 100 can be completed without setting mounting accessories for the frame and the lug, so that a plurality of components in the smart glasses 100 are integrally formed.

Wherein the lens mounting member 210 can include a corresponding lens mounting frame, and the waveguide assembly 11 can be mounted within the lens mounting frame. The temple connector 211 can be configured to connect with the lens mounting member 210 and the temple assembly 22.

Specifically, the lens mounting member 210 and the temple connector 211 in the frame assembly 21 can cooperate with each other to complete the connection between the temple assembly 22 and the waveguide assembly 11 without the need for additional mounting accessories for the frame and the lug, so that a plurality of components in the smart glasses 100 are integrally formed.

Exemplarily, the housing of the lens mounting member 210, temple connector 211, optical engine assembly 12 and other components is integrally formed with metal materials through die-casting, so that a plurality of components in the smart glasses 100 are integrally formed. Compared with traditional glasses that require mounting accessories for the frame and lug for mounting, the embodiments of this application eliminate the need for mounting accessories for the frame and lug. Meanwhile, the frame assembly 21 can accommodate components like the optical engine assembly 12 of the smart glasses 100. This enables the integrally formed frame assembly 21 to achieve the effects of screw-free design, high precision, ultra-light weight, low cost, and good mass-production feasibility.

As shown in FIG. 9, in some embodiments, an optomechanical receiving cavity 212 is formed on a side of the lens mounting member 210 that is close to the temple assembly 22, and the optical engine assembly 12 is accommodated in the optomechanical receiving cavity 212. Thereby, the optical engine assembly 12 can be accommodated in the optomechanical receiving cavity 212, preventing the optical engine assembly 12 from being damaged due to exposure.

Specifically, the optomechanical receiving cavity 212 can be placed on the outer side of the front end of the temple 222, so that the optical engine assembly 12 accommodated in the optomechanical receiving cavity 212 is also placed on the outer side of the front end of the temple 222. This design can avoid obstructing the field of vision when the smart glasses 100 are worn normally, which is caused by placing components such as the optical engine assembly 12 in front of the wearer's field of vision, improving the wearing comfort of users.

In some embodiments, a straight-line distance between the optical engine assembly 12 and the wearer's head is greater than 20 mm. This can avoid wearing discomfort caused by placing the optical engine assembly 12 too close to the wearer's head.

Wherein the straight-line distance between the optical engine assembly 12 and the wearer's head can be any distance. Generally, if the straight-line distance between the optical engine assembly 12 and the wearer's head is greater than 20 mm, it can effectively reduce the wearer's wearing discomfort.

Specifically, the optomechanical receiving cavity 212 can be provided at a position where the straight-line distance from the wearer's head is more than 20 mm, and the optical engine assembly 12 is accommodated in the optomechanical receiving cavity 212, so that the optical engine assembly 12 is away from the skin around the eyes and more than 20 mm away from the wearer's temporal region, which will not cause wearing discomfort to the wearer.

In some embodiments, the main control module is accommodated in the optomechanical receiving cavity 212. The main control module is connected to the optical engine assembly 12, and is electrically connected to the battery module 30 through the flexible connector 220. In this way, both the main control module and the optical engine assembly 12 can be accommodated in the optomechanical receiving cavity 212, thereby reducing the volume and weight of the frame assembly 21.

Specifically, both the main control module and the optical engine assembly 12 can be connected to the battery module 30 through the flexible connector 220, thereby enabling the battery module 30 to supply power to the main control module and the optical engine assembly 12, and enabling the main control module to control the optical engine assembly 12 to emit light. Since both the main control module and the optical engine assembly 12 are accommodated in the optomechanical receiving cavity 212, they do not need to be connected via the flexible connector 220. Instead, the connection between the main control module and the optical engine assembly 12 can be achieved in a wired or wireless manner, effectively saving the volume and weight of the frame assembly 21.

In some embodiments, the main control module and the optical engine assembly 12 are relatively fixedly provided or integrally provided, thereby effectively reducing the volume and weight of the frame assembly 21.

To reduce the volume and mass of the optical engine assembly 12 and peripheral hardware circuits, the optical engine assembly 12 in the embodiments of this application can adopt the display technology of Micro LED optical engines. Compared with DLP, LCOS, and LBS technologies, the Micro LED optical engine uses a self-luminous light source display chip, eliminating the need for a lighting source (technologies such as DLP, LCOS, and LBS are reflective light-emitting and require a lighting source). This can greatly reduce the volume and weight of the optical engine assembly 12. Meanwhile, the drive circuit of the Micro LED solution is also designed integrally, making the drive circuit of the optical engine assembly 12 more concise and lightweight.

In the embodiments of this application, a front-to-rear stacking arrangement of the optical engine assembly 12 and the main control module is designed. This makes the front end of the overall frame assembly 21 slender in volume, significantly reducing obstruction to the field of vision. Through a stacked structure design linked by flexible and rigid boards, it is possible to arrange various electronic components with maximum efficiency while ensuring that components interacting with the outside can be arranged at the bottom layer of the main control module, without being affected by the volume of the optical engine assembly 12.

Specifically, if components such as FPC connectors and peripheral hardware circuits are excluded, the volume of the optical engine assembly 12 can be designed to be less than 0.3 cm³. This enables the miniaturization of the optical engine assembly 12, thereby reducing the volume and weight of the optical engine assembly 12.

Exemplarily, if components such as FPC connectors and peripheral hardware circuits are excluded, the volume of the optical engine assembly 12 can be 0.1 cm³, which is not specifically limited herein.

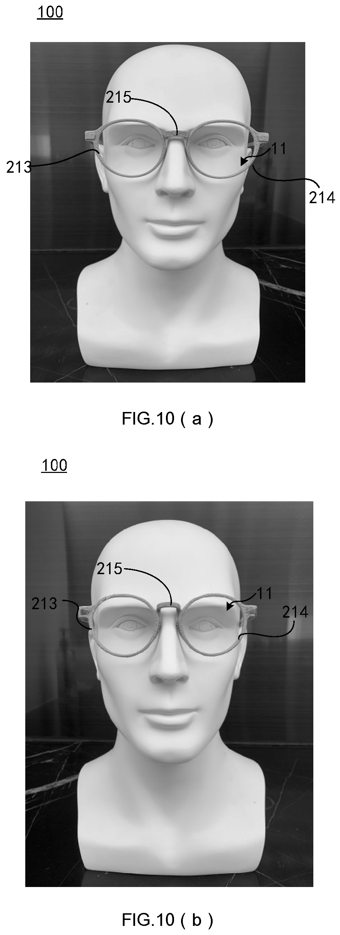

As shown in FIGS. 10 (a) and 10 (b), in some embodiments, the lens mounting member 210 includes a first lens mounting frame 213, a second lens mounting frame 214, and a nose pad 215. The first lens mounting frame 213 is connected to the temple connector 211 and used for connecting with the waveguide assembly 11; the second lens mounting frame 214 is connected to another temple connector 211 and used for connecting with the waveguide assembly 11; the nose pad 215 is used for connecting the first lens mounting frame 213 and the second lens mounting frame 214. Thus, the first lens mounting frame 213 and the second lens mounting frame 214 can be connected through the adjustable nose pad 215, thereby increasing the adjustment flexibility of the smart glasses 100, better fitting the face shapes of different wearers, and improving the long-term wearing comfort of wearers.

Specifically, the first lens mounting frame 213 is connected to the corresponding temple connector 211. The waveguide assembly **11** can be mounted inside the first lens mounting frame 213, or the waveguide assembly **11** cannot be mounted inside the first lens mounting frame 213; the second lens mounting frame 214 is also connected to the corresponding temple connector 211. The waveguide assembly **11** can be mounted inside the second lens mounting frame 214, or the waveguide assembly **11** cannot be mounted inside the second lens mounting frame 214, which can be specifically set by the user.

Specifically, the optomechanical images generated by the optical engine assembly 12 corresponding to the first lens mounting frame 213 and the optical engine assembly 12 corresponding to the second lens mounting frame 214 can be synchronized through a 2.4G wireless channel. By eliminating the need for physical wiring between the optical engine assemblys 12 for signal transmission, it avoids cabling between the frames, thereby significantly reducing the thickness and weight of the frame. It also prevents the optical engine assembly 12 from obstructing the field of vision.

In some embodiments, the nose pad 215 is made of a flexible material. Thus, the first lens mounting frame 213 and the second lens mounting frame 214 can be connected through the adjustable nose pad 215, thereby increasing the adjustment flexibility of the smart glasses 100, better fitting the face shapes of different wearers, and improving the long-term wearing comfort of wearers

Wherein the contact surface between the nose pad 215 and the bridge of the nose can use materials with good skin-friendliness and excellent resilience and cushioning, so as to improve the wearing experience of the wearer.

In some embodiments, the parameter of the nose pad 215 is determined based on the wearer's nose shape. This can increase the adjustment flexibility of the smart glasses 100, better fit the face shapes and nose shapes of different wearers, and improve the long-term wearing comfort of the wearers.

Wherein the parameter of the nose pad 215 includes one or more of height, spacing, angle and shape, which are not specifically limited herein. The height of the nose pad 215 can be the height of the nose pad 215 relative to the bridge of the nose, the spacing between the nose pads 215 can be the distance between the first lens mounting frame 213 and the second lens mounting frame 214, the angle of the nose pad 215 can be the angle formed by the nose pad 215, and the shape of the nose pad 215 is used to represent the shape after the nose pad 215 has been flexibly adjusted.

Exemplarily, the parameter of the nose pad 215 can be determined based on the contact surface between the nose pad 215 and the bridge of the nose. For example, the size and shape of the nose pad 215 can be determined based on different nose shapes.

Exemplarily, when the user is getting glasses fitted offline, 3D facial scan data can be incorporated to pre-adjust parameters of the nose pad 215 such as angle and spacing at the offline store. The nose pad 215 can be made of adjustable memory metal.

Exemplarily, if the nose pad 215 is accidentally lost, the remaining first lens mounting frame 213 and second lens mounting frame 214 in the lens mounting member 210 are still in line with ergonomics. When the nose pad 215 is lost or falls off, the smart glasses 100 can still meet the wearing requirements and ensure short-term wearing comfort.

In some embodiments, the overall height of the smart glasses 100 can also be adjusted by adjusting the nose pad 215 and the position and/or weight of the counterweight module. This allows the smart glasses 100 to be integrally shifted upward relative to the wearer, thereby moving the coupled-out grating region in the waveguide assembly **11** out of the central area of the main field of view of the smart glasses 100. This effectively avoids diffractive rainbow stripes in the wearer's main field of view, while ensuring the AR imaging function in the effective area, allowing the wearer to clearly and accurately see the display information in the coupled-out grating region with a slight upward glance.

Exemplarily, by adjusting the position and/or weight of the counterweight module, the counterweight module at the rear end of the temple 222 can act as a lever relative to the wearer's ear, thereby lifting the front end of the smart glasses 100. This allows the smart glasses 100 to be integrally shifted upward relative to the wearer, thereby moving the coupled-out grating region in the waveguide assembly **11** out of the central area of the main field of view of the smart glasses 100. This effectively avoids diffractive rainbow stripes in the wearer's main field of view, while ensuring the AR imaging function in the effective area, allowing the wearer to clearly and accurately see the display information in the coupled-out grating region with a slight upward glance.

Exemplarily, if merely adjusting the position and/or weight of the counterweight module causes the smart glasses 100 to integrally shift upward relative to the wearer, the nose pad 215 at the front end of the glasses might become suspended, which is not very conducive to the wearing comfort. Therefore, the parameter of the nose pad 215 could be correspondingly adjusted to meet the wearer's needs. Under the premise of effectively avoiding diffractive rainbow stripes in the wearer's main field of view, it can also ensure the wearer's wearing experience.

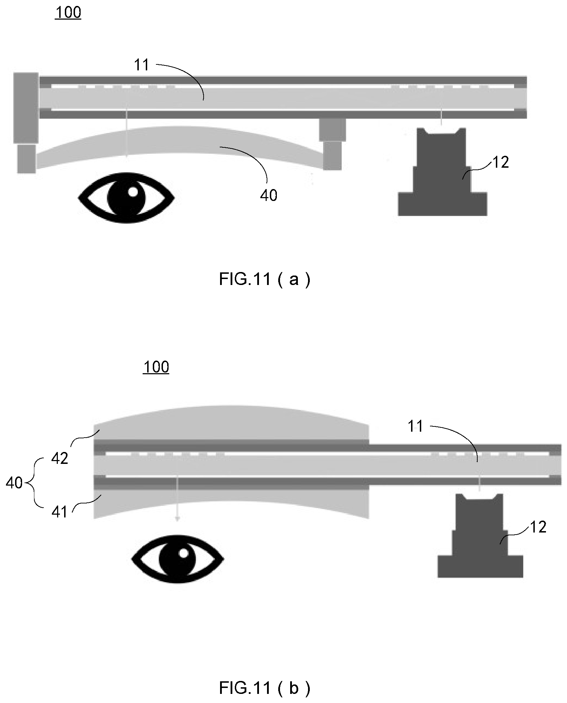

As shown in FIGS. 11 (a) and 11 (b), in some embodiments, the smart glasses 100 further include a diopter module 40. The diopter module 40 includes a first diopter lens 41 and/or a second diopter lens 42. The first diopter lens 41 is provided on the first surface of the waveguide assembly 11, and the second diopter lens 42 is provided on the second surface of the waveguide assembly 11. Thereby, the problem of diopter correction existing in the smart glasses 100 can be solved.

As shown in FIG. **11** (a), exemplarily, the diopter module 40 can only include the first diopter lens 41 without the second diopter lens 42. **In** this case, the first diopter lens 41 can be provided on the first surface of the waveguide assembly **11,** that is, on the surface of the waveguide assembly **11** close to the wearer, so as to solve the diopter correction problem of the smart glasses 100.

Exemplarily, the diopter module 40 can only include the second diopter lens 42 without the first diopter lens 41. In this case, the second diopter lens 42 can be provided on the second surface of the waveguide assembly 11, that is, on the surface of the waveguide assembly 11 away from the wearer, so as to solve the diopter correction problem of the smart glasses 100.

As shown in FIG. 11 (b), exemplarily, the diopter module 40 can include both the first diopter lens 41 and the second diopter lens 42. In this case, the first diopter lens 41 can be provided on the first surface of the waveguide assembly 11, i.e., on the surface of the waveguide assembly 11 close to the wearer, and the second diopter lens 42 can be provided on the second surface of the waveguide assembly 11, i.e., on the surface of the waveguide assembly 11 away from the wearer, so as to solve the diopter correction problem of the smart glasses 100.

In some embodiments, the diopter module 40 and the waveguide assembly **11** are relatively fixedly provided or integrally provided. This can make the overall weight of the smart glasses 100 lighter and the overall thickness of the lens thinner.

Exemplarily, by integrally providing the diopter module 40 and the waveguide assembly **11,** the weight of the lenses of the diopter module 40 and the waveguide assembly **11** can be comparable to that of conventional diopter lenses, without adding extra weight burden to affect the wearing comfort..

Exemplarily, the waveguide assembly **11** can also be designed with a transparent lens with high light transmittance, so that the smart glasses 100 can achieve a visual effect comparable to that of normal diopter glasses, and the field of vision is not obstructed by the additionally added waveguide assembly 11.

This application provides a pair of smart glasses 100. The smart glasses 100 include a display module 10, a frame module 20, and a battery module 30; the display module 10 includes an optical engine assembly 12 and a waveguide assembly 11; the waveguide assembly 11 is configured to receive display light emitted by the optical engine assembly 12 and form outgoing light; the frame module 20 includes a frame assembly 21 and temple assembly 22 connected to the frame assembly 21; the frame assembly 21 is connected to the waveguide assembly 11, and both the optical engine assembly 12 and the waveguide assembly 11 are mounted on the frame assembly 21;the temple assembly 22 includes a temple 222 and a flexible connector 220 provided in the temple 22; the battery module 30 is connected to an end of the temple 222 that is away from the frame assembly 21, and the battery module 30 is electrically connected to the optical engine assembly 12 via the flexible connector 220; since the temples 222 have flexibility, the temples 222 can be bent into a curved shape, deforming according to the wearer's head size and head shape. This enables the smart glasses 100 to adapt to different head shapes, forming a wrapping effect around the wearer's head, and thereby improving wearing stability and comfort.

The aforementioned descriptions are merely specific embodiments of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A pair of smart glasses, comprising:
a display module comprising an optical engine assembly and a waveguide assembly, the waveguide assembly is configured to receive display light emitted by the optical engine assembly and form outgoing light;
a frame module comprising a frame assembly and a temple assembly connected to the frame assembly, the frame assembly is connected to the waveguide assembly, and both the optical engine assembly and the waveguide assembly are mounted on the frame assembly; the temple assembly comprises a temple and a flexible connector provided in the temple;
a battery module connected to an end of the temple away from the frame assembly, the battery module is electrically connected to the optical engine assembly via the flexible connector;
wherein the temple is flexible, such that the temple deforms according to a wearer's head size and head shape.

2. The smart glasses according to claim 1, wherein the flexible connector comprises a flexible printed circuit board.

3. The smart glasses according to claim 2, wherein a receiving groove is formed within the temple, and the flexible printed circuit board is housed in the receiving groove and closely fits the receiving groove.

4. The smart glasses according to claim 3, wherein the flexible printed circuit board mounted in the temple is sealed and molded by means of in-mold injection molding to form the temple assembly.

5. The smart glasses according to claim 3, wherein the temple, the flexible printed circuit board, and a stiffener are pressed together by means of adhesive dispensing or hot-press lamination to form the temple assembly.

6. The smart glasses according to claim 1, wherein the temple assembly further comprises a flexible member comprising a first connecting part, the temple comprises a second connecting part, wherein the flexible member engages with the temple via the first connecting part and the second connecting part to seal the flexible connector.

7. The smart glasses according to claim 6, wherein the first connecting part comprises a groove part, the second connecting part comprises a protrusion part, and the protrusion part is formed on a surface of the temple via in-mold injection molding.

8. The smart glasses according to any one of claims 1-7, wherein a material of the temple comprises flexible metal or flexible sheet.

9. The smart glasses according to claim 1, wherein a mounting position of the battery module on the temple is collectively determined based on a weight of the battery module, a weight of the display module, and a weight of the frame assembly.

10. The smart glasses according to claim 1, wherein a mounting position of the battery module on the temple is determined relative to a wearer's ear part.

11. The smart glasses according to claim 1, wherein the temple is further configured to be bent with a preset arc in a first direction, forming an earpiece at the end of the temple away from the frame assembly, and the earpiece is configured to be adapted to a shape of the wearer's ear to make the smart glasses fit stable; wherein the first direction is a direction perpendicular to the temple.

12. The smart glasses according to claim 11, wherein an angle corresponding to the preset arc is determined relative to the shape and a position of the wearer's ear.

13. The smart glasses according to claim 12, wherein the angle corresponding to the preset arc is greater than or equal to 150° and less than or equal to 180°.

14. The smart glasses according to claim 11, wherein the battery module is provided in the earpiece.

15. The smart glasses according to claim 1, further comprising:
a counterweight module connected to the end of the temple away from the frame assembly, configured to balance two ends of the temple.

16. The smart glasses according to claim 15, wherein if a weight of the counterweight module is fixed, a mounting position of the counterweight module on the temple is determined based on a weight of the battery module, a weight of the display module, and a weight of the frame assembly.

17. The smart glasses according to claim 15, wherein if a mounting position of the counterweight module on the temple is fixed, a weight of the counterweight module is determined based on a weight of the battery module, a weight of the display module, and a weight of the frame assembly.

18. The smart glasses according to any one of claims 15-17, wherein the counterweight module is connected to the temple via magnetic attachment.

19. The smart glasses according to any one of claims 9-17, wherein the battery module is connected to the temple via adhesive dispensing.

20. The smart glasses according to claim 1, comprising:
a sensor module provided at the end of the temple away from the frame assembly, configured to be electrically connected to the battery module via the flexible connector, and further configured to monitor the wearer's physical condition.

21. The smart glasses according to claim 1, comprising:
a main control module electrically connected to the battery module and for controlling the optical engine assembly to emit light.

22. The smart glasses according to claim 21, wherein the main control module is provided at the end of the temple away from the frame assembly, and the main control module is connected to the optical engine assembly through the flexible connector.

23. The smart glasses according to claim 22, wherein the battery module and the main control module are relatively fixedly provided or integrally provided.

24. The smart glasses according to claim 21, wherein the frame assembly comprises a lens mounting member and a temple connector connected to the temple assembly and the lens mounting member; wherein the waveguide assembly is connected to a side of the lens mounting member away from the temple connector.

25. The smart glasses according to claim 24, wherein an optomechanical receiving cavity is formed on a side of the lens mounting member close to the temple assembly, and the optical engine assembly is accommodated in the optomechanical receiving cavity.

26. The smart glasses according to claim 25, wherein a straight-line distance between the optical engine assembly and the wearer's head is greater than 20 mm.

27. The smart glasses according to claim 25, wherein the main control module is accommodated in the optomechanical receiving cavity, connected to the optical engine assembly, and electrically connected to the battery module through the flexible connector.

28. The smart glasses according to claim 27, wherein the main control module and the optical engine assembly are relatively fixedly provided or integrally provided.

29. The smart glasses according to any one of claims 24-27, wherein a volume of the optical engine assembly is less than 0.3cm^3.

30. The smart glasses according to claim 24, wherein the lens mounting member comprises:
a first lens mounting frames connected to the temple connector and is configured to be connected to the waveguide assembly;
a second lens mounting frame connected to another temple connector and configured to be connected to the waveguide assembly; and
a nose pad configured to connect the first lens mounting frame and the second lens mounting frame.

31. The smart glasses according to claim 30, wherein the nose pad is made of a flexible material.

32. The smart glasses according to claim 31, wherein a parameter of the nose pad is determined based on a shape of the wearer's nose.

33. The smart glasses according to claim 32, wherein the parameter of the nose pad comprises one or more of height, spacing, angle, and shape.

34. The smart glasses according to claim 1, further comprising:
a diopter module comprising a first diopter lens and/or a second diopter lens, the first diopter lens is provided on a first surface of the waveguide assembly, and the second diopter lens is provided on a second surface of the waveguide assembly.

35. The smart glasses according to claim 34, wherein the diopter module and the waveguide assembly are relatively fixedly provided or integrally provided.
